# FASCICULE DE BREVET EUROPEEN

(11) **EP 3 027 427 B1**
(45) Date de publication et mention de la délivrance du brevet: **19.06.2019**
(21) Numéro de dépôt: 14744332.9
(22) Date de dépôt: 28.07.2014
(51) Int. Cl.: B60C 9/00, B60C 9/20

(54) **PNEUMATIQUE COMPRENANT UN PRODUIT RENFORCÉ**
REIFEN MIT EINEM VERSTÄRKTEN PRODUKT
TYRE COMPRISING A REINFORCED PRODUCT

(30) Priorité: 29.07.2013 FR 1357458
(43) Date de publication de la demande: 08.06.2016
(73) Titulaire: Compagnie Générale des Etablissements Michelin, 63000 Clermont-Ferrand (FR)
(72) Inventeur: NOEL, Sébastien, 63040 Clermont-Ferrand Cedex 9 (FR); LARDJANE, Aurore, 63040 Clermont-Ferrand Cedex 9 (FR); RIGO, Sébastien, 63040 Clermont-Ferrand Cedex 9 (FR)
(74) Mandataire: Desbordes, Guillaume
(86) Numéro de dépôt international: PCT/EP2014/066145
(87) Numéro de publication internationale: WO 2015/014778

(56) Documents cités:
- WO-A1-2012/104281
- FR-A1- 2 504 067
- JP-A- H04 154 405

## Description

L'invention a pour objet un pneumatique comprenant un produit renforcé.

L'invention s'applique à des véhicules de tourisme, des véhicules à deux roues, des véhicules industriels choisis parmi des camionnettes, véhicules lourds tels que "Poids lourd" - i.e., métro, bus, engins de transport routier (camions, tracteurs, remorques), véhicules hors-la-route -, engins agricoles ou de génie civil, aéronef, autres véhicules de transport ou de manutention.

On connait de l'état de la technique un pneumatique pour véhicule de tourisme comprenant une armature de carcasse ancrée dans deux bourrelets et surmontée radialement par une armature de sommet elle-même surmontée d'une bande de roulement qui est réunie aux bourrelets par deux flancs. Des sillons circonférentiels sont ménagés dans la bande de roulement.

Dans un tel pneumatique, l'armature de sommet comprend une armature de frettage et une armature de travail. L'armature de frettage est radialement intercalée entre la bande de roulement et l'armature de travail.

L'armature de travail comprend deux nappes de travail formant chacune un produit renforcé comprenant une matrice d'élastomère, par exemple du caoutchouc naturel, et plusieurs éléments de renfort noyés dans la matrice d'élastomère. Les éléments de renforts sont agencés côte à côte selon une direction principale formant un angle allant de 15° à 40°, de préférence allant de 20° à 30° avec la direction circonférentielle du pneumatique. Les éléments de renfort sont croisés d'une nappe de travail par rapport à l'autre.

Ces nappes de travail ont notamment pour fonction première de conférer au pneumatique une rigidité ou poussée de dérive (en anglais, "drift thrust" ou "cornering") élevée, nécessaire de manière connue pour l'obtention d'un bon comportement routier ("handling") sur véhicule automobile. D'autres performances sont également liées au bon fonctionnement des nappes de travail, comme par exemple la résistance au roulement ou encore l'énergie de rupture ("breaking energy").

Chaque élément de renfort comprend un élément filaire tel qu'un unique brin multifilamentaire de monofilaments métalliques. Par exemple, le brin multifilamentaire est un câble 2.30 comprenant deux monofilaments de 0,30 mm de diamètre câblés ou retordus ensemble.

Afin de garantir l'endurance de l'armature de sommet, notamment sa résistance vis-à-vis de la corrosion, il est préférable de disposer d'une épaisseur de gomme minimale d'élastomère recouvrant chaque élément de renfort selon la direction radiale. Cette épaisseur est généralement appelée épaisseur au dos, car disposée au dos de l'élément de renfort.

Toujours afin de garantir l'endurance de l'armature de sommet, la bande de roulement comprend, sous les sillons circonférentiels, une épaisseur moyenne de masse de caoutchouc séparant un fond radialement interne du sillon circonférentiel du bord radialement externe de l'armature de sommet sensiblement égale à 2,4 mm.

Ces épaisseurs de gomme minimales, de l'armature de sommet et de la bande de roulement, contribuent à alourdir le pneumatique.

Le produit renforcé comprend également des ponts d'élastomère. Chaque pont d'élastomère est formé par l'épaisseur moyenne d'élastomère séparant deux éléments de renfort adjacent selon la direction principale selon laquelle les éléments de renfort sont agencés côte à côte.

Lors de la fabrication du produit renforcé, on fait défiler les éléments de renforts et on amène deux bandes d'élastomère, appelés skims, de part et d'autre des éléments de renfort de façon à prendre en sandwich les éléments de renforts entre les deux skims.

Afin d'assurer la pénétration de l'élastomère entre les éléments de renforts et la formation correcte des ponts d'élastomère, il est préférable de disposer de skims relativement épais de façon à ce qu'une quantité suffisante d'élastomère comble l'espace entre deux éléments de renforts adjacents. L'épaisseur importante des skims garantit également l'épaisseur moyenne d'élastomère au dos nécessaire à la protection des éléments de renforts.

Ainsi, le produit renforcé présente une masse élevée en partie due à la masse importante d'élastomère mais également à la masse de métal des éléments de renfort. Un tel produit renforcé est notamment décrit dans le document JP H04 154405.

Des pneumatiques comprenant des produits renforcés sont décrits dans FR-A-2504067 et WO-A-2012104281.

L'invention a pour objet de réduire la masse du produit renforcé tout en garantissant des performances équivalentes, voire supérieures, en résistance au roulement et en énergie de rupture.

A cet effet, l'invention a pour objet un pneumatique tel que défini dans la revendication 1.

Ledit pneumatique comprend un produit renforcé comprenant :
- une matrice d'élastomère,
- plusieurs éléments de renfort noyés dans la matrice d'élastomère, les éléments de renfort étant agencés côte à côte selon une direction principale, chaque élément de renfort comprenant :
   - au moins un élément filaire comprenant un unique monofilament,
   - au moins une gaine revêtant l'élément filaire et comprenant au moins une couche d'une composition polymérique thermoplastique,
le rapport R1=ODO/E de l'épaisseur minimale ODO moyenne d'élastomère présente au dos de la gaine sur l'épaisseur E moyenne du produit renforcé est inférieur ou égal à 0,17, les épaisseurs minimale moyenne d'élastomère ODO et moyenne E du produit renforcé étant mesurées selon une direction sensiblement perpendiculaire à la direction principale.

Le produit renforcé selon l'invention présente une masse relativement réduite par rapport au produit renforcé de l'état de la technique. Grâce à la gaine, on réduit la quantité d'élastomère nécessaire pour protéger chaque élément filaire, la protection étant en partie assurée par la gaine. En effet, la gaine constitue une barrière efficace contre les agents corrosifs susceptibles de pénétrer dans le produit renforcé en cas d'agressions de ce dernier. De plus, chaque élément filaire étant protégé par la gaine, on peut réduire l'épaisseur de la bande de roulement destiné à protéger l'armature de sommet ce qui contribue également à réduire la masse du pneumatique.

Grâce à l'utilisation de monofilaments ne nécessitant aucune opération d'assemblage préalable, on peut donc produire un produit renforcé à coût réduit tout en maintenant, voire en améliorant, la résistance au roulement et l'énergie de rupture comme le montrent les tests comparatifs ci-après.

Parmi tous les avantages du produit renforcé, on peut citer le fait que la gaine présente une rigidité intermédiaire entre la rigidité de l'élément filaire et la rigidité de la matrice élastomérique. La rigidité entre l'élément filaire et la matrice élastomérique est donc moins discontinue qu'en l'absence de gaine, ce qui réduit les contraintes exercées aux interfaces et améliore l'endurance globale du produit renforcé.

Le produit renforcé présente une forme générale de bande s'étendant selon une direction perpendiculaire à la direction principale. La largeur L et l'épaisseur E du produit renforcé sont telles que L>E, de préférence L>10.E. Ainsi, la direction sensiblement perpendiculaire à la direction principale selon laquelle sont mesurées les épaisseurs minimale moyenne d'élastomère ODO et moyenne E du produit renforcé est sensiblement parallèle à l'épaisseur E de la bande formant le produit renforcé.

Dans le cas d'un produit renforcé isolé, l'épaisseur minimale ODO moyenne est mesurée, de part et d'autre d'un plan médian séparant le produit renforcé selon la direction principale en deux parties de même largeur, sur une largeur axiale totale de 10 cm (soit entre - 5 cm et + 5 cm par rapport au plan médian du produit renforcé) et moyennée sur le nombre de mesures effectuées au dos des éléments de renfort (soit, par exemple au total 100 mesures si l'on trouve 10 éléments de renforts par cm). L'épaisseur E moyenne est mesurée de façon analogue en moyennant les mesures de l'épaisseur du produit renforcé effectuées aux cotes auxquelles sont présents des éléments de renforts.

Dans le cas d'un pneumatique comprenant le produit renforcé, on mesure l'épaisseur minimale ODO moyenne et l'épaisseur E moyenne de façon analogue de part et d'autre du plan médian du pneumatique.

Par élément filaire, on entend tout élément longiligne de grande longueur relativement à sa section transversale, quelle que soit la forme de cette dernière, par exemple circulaire, oblongue, rectangulaire ou carrée, ou même plate, cet élément filaire pouvant être par exemple torsadé ou ondulé. Lorsqu'il est de forme circulaire, son diamètre est de préférence inférieur à 5 mm, plus préférentiellement compris dans un domaine allant de 200 µm à 1 mm.

Par composition polymérique thermoplastique, on entend une composition comprenant au moins un polymère ayant les propriétés d'un polymère thermoplastique. La composition peut comprendre d'autres polymères, de préférence thermoplastiques, éventuellement des élastomères ainsi que d'autres composants non polymériques.

Par élastomère (ou caoutchouc, les deux termes étant considérés comme synonymes), que ce soit lorsque l'on parle de la matrice ou bien de la composition polymérique thermoplastique, on désigne tout type d'élastomère, qu'il soit du type diénique ou du type non diénique, par exemple thermoplastique.

De préférence, l'élastomère est diénique et plus préférentiellement choisi dans le groupe constitué par les polybutadiènes (BR), les polyisoprènes de synthèse (IR), le caoutchouc naturel (NR), les copolymères de butadiène, les copolymères d'isoprène et les mélanges de ces élastomères. De tels copolymères sont plus préférentiellement choisis dans le groupe constitué par les copolymères de styrène-butadiène (SBR), les copolymères d'isoprène-butadiène (BIR), les copolymères d'isoprène-styrène (SIR), les copolymères d'isoprène-butadiène-styrène (SBIR) et les mélanges de tels copolymères.

Selon certaines caractéristiques optionnelles et avantageuses du produit renforcé :
- Le rapport R1 est inférieur ou égal à 0,15 et de préférence à 0,14.
- L'épaisseur minimale ODO moyenne est inférieure ou égale à 0,17 mm, de préférence à 0,14 mm, plus préférentiellement à 0,11 mm.

Dans un mode de réalisation, de préférence destiné à un pneumatique pour véhicule de tourisme, l'épaisseur E moyenne est inférieure ou égale à 0,95 mm, de préférence à 0,85 mm et plus préférentiellement à 0,75 mm.

Avantageusement, le rapport R2=B/E de l'épaisseur minimale B moyenne d'élastomère séparant deux éléments de renfort successifs selon la direction principale sur l'épaisseur E moyenne du produit renforcé est inférieur ou égal à 1, de préférence à 0,6, plus préférentiellement à 0,5 et encore plus préférentiellement à 0,3.

L'épaisseur des ponts d'élastomère étant réduite grâce à la gaine, on réduit l'épaisseur des skims utilisés lors de la fabrication et donc la masse d'élastomère du produit renforcé sans pour autant réduire la quantité de matière revêtant l'élément filaire, cette matière étant constituée, dans le produit renforcé, par la gaine et la matrice d'élastomère.

Dans le cas d'un produit renforcé isolé, l'épaisseur minimale B moyenne est mesurée, de part et d'autre d'un plan médian séparant le produit renforcé selon la direction principale en deux parties de même largeur, sur une largeur axiale totale de 10 cm (soit entre - 5 cm et + 5 cm par rapport au plan médian du produit renforcé) et moyennée sur le nombre de mesures effectuées entre les éléments de renfort (soit, par exemple au total 99 mesures si l'on trouve 10 éléments de renforts par cm).

Dans le cas d'un pneumatique comprenant le produit renforcé, on mesure l'épaisseur minimale B moyenne de façon analogue de part et d'autre du plan médian du pneumatique.

Dans un mode de réalisation, de préférence destiné à un pneumatique pour véhicule de tourisme, l'épaisseur minimale B moyenne d'élastomère séparant deux éléments de renfort successifs selon la direction principale est inférieure ou égale à 0,5 mm, de préférence à 0,35 mm, plus préférentiellement à 0,20 mm.

Dans un mode de réalisation, de préférence destiné à un pneumatique pour véhicule de tourisme, le pas de pose P des éléments de renfort selon la direction principale est inférieur ou égal à 1,1 mm, de préférence à 1 mm et plus préférentiellement à 0,8 mm. On rappelle que le pas de pose est la distance, selon la direction perpendiculaire aux axes de deux éléments de renfort adjacents, séparant deux points analogues de deux éléments de renfort adjacents. En d'autres termes, le pas de pose est la distance axe à axe entre deux éléments de renfort adjacents.

Dans le cas où l'on utilise des éléments filaires relativement petits, il est préférable d'avoir un pas de pose relativement petit afin d'avoir un produit renforcé présentant une force à rupture suffisamment élevé.

De façon optionnelle, l'épaisseur G moyenne de la gaine au dos de chaque élément filaire selon la direction perpendiculaire à la direction principale va de 1 µm à 2 mm, de préférence de 10 µm à 1 mm et plus préférentiellement de 35 µm à 200 µm.

Dans le cas d'un produit renforcé isolé, l'épaisseur G moyenne est mesurée sur une largeur axiale totale de 10 cm (soit entre - 5 cm et + 5 cm par rapport au plan médian du produit renforcé) et moyennée sur le nombre de mesures effectuées (soit, par exemple au total 100 mesures si l'on trouve 10 éléments de renforts par cm). Pour chaque mesure, l'épaisseur de la gaine est déterminée en divisant par deux la différence entre l'encombrement de l'élément de renfort et l'encombrement de l'élément filaire selon une direction perpendiculaire à la direction principale, ici la direction sensiblement parallèle à l'épaisseur du produit renforcé.

Dans le cas d'un pneumatique comprenant le produit renforcé, on mesure l'épaisseur G moyenne de façon analogue de part et d'autre du plan médian du pneumatique.

Dans un mode de réalisation, chaque élément de renfort comprend un unique élément filaire.

Dans un autre mode de réalisation, chaque élément de renfort comprend plusieurs éléments filaires comprenant chacun un unique monofilament et une gaine commune revêtant collectivement les éléments filaires. Le fait que la gaine revête collectivement plusieurs éléments filaires permet d'obtenir une force à rupture du produit renforcé relativement élevée sans augmentation de la masse car la gaine commune permet de réduire le nombre de ponts de gomme tout en maintenant, voir en augmentant, la densité d'éléments filaires dans le produit renforcé.

De préférence, le ou chaque monofilament est métallique.

Par monofilament métallique, on entend par définition un monofilament constitué majoritairement (c'est-à-dire pour plus de 50% de sa masse) ou intégralement (pour 100% de sa masse) d'un matériau métallique. Le ou chaque monofilament est préférentiellement en acier, plus préférentiellement en acier perlitique (ou ferrito-perlitique) au carbone désigné ci-après par "acier au carbone", ou encore en acier inoxydable (par définition, acier comportant au moins 11% de chrome et au moins 50% de fer).

Lorsqu'un acier au carbone est utilisé, sa teneur en carbone (% en poids d'acier) est de préférence comprise entre 0,5% et 0,9%. On utilise de préférence un acier du type steel cord à résistance normale (dit "NT" pour " Normal Tensile ") ou à haute résistance (dit "HT" pour " High Tensile ") dont la résistance en traction (Rm) est de préférence supérieure à 2000 MPa, plus préférentiellement supérieure à 2500 MPa et inférieure à 3000 MPa (mesure effectuée en traction selon la norme ISO 6892 de 1984.

Dans un mode de réalisation préféré, le ou chaque monofilament présente un diamètre allant de 0,10 mm à 0,35 mm, de préférence de 0,12 mm à 0,26 mm et plus préférentiellement de 0,14 mm à 0,20 mm.

Avantageusement, chaque élément filaire présentant un encombrement D moyen selon la direction sensiblement perpendiculaire à la direction principale, le rapport R3=D/E de l'encombrement D moyen sur l'épaisseur E moyenne du produit renforcé est inférieur ou égal à 0,6, de préférence à 0,55 et plus préférentiellement à 0,50.

On mesure l'encombrement D moyen de façon analogue à la mesure de l'épaisseur G moyenne de la gaine que ce soit dans le produit renforcé ou dans le pneumatique.

Alors qu'il est habituellement recommandé d'utiliser des éléments filaires relativement gros afin de compenser la perte de résistance mécanique due à leur oxydation, il est ici possible d'utiliser des éléments filaires de taille relativement petite, la gaine les protégeant contre l'oxydation et la perte de résistance mécanique. Ainsi, on réduit l'épaisseur moyenne E du produit renforcé et donc la masse de ce dernier.

De façon préférée, la composition polymérique thermoplastique comprend un polymère thermoplastique, un élastomère diénique fonctionnalisé, un poly (p-phénylène éther) ou un mélange de ces matériaux.

De préférence, l'élastomère diénique fonctionnalisé est un élastomère thermoplastique styrénique.

Dans un mode de réalisation, la gaine comprend une unique couche de la composition polymérique thermoplastique. En variante, la gaine comprend plusieurs couches, au moins l'une d'entre elles comprenant une composition polymérique thermoplastique.

On pourra ainsi utiliser les différents matériaux et couches décrits dans les demandes WO2010/136389, WO2010/105975, WO2011/012521, WO2011/051204, WO2012/016757, WO2012/038340, WO2012/038341, WO2012/069346, WO2012/104279, WO2012/104280 et WO2012/104281.

Avantageusement, la gaine est revêtue d'une couche d'une colle d'adhésion entre la gaine et la matrice d'élastomère.

La colle utilisée est par exemple du type RFL (Résorcinol-Formaldéhyde-Latex) ou par exemple, telle que décrite dans les publications WO2013017421, WO2013017422, WO2013017423.

L'invention a également pour objet un pneumatique comprenant un produit renforcé tel que défini ci-dessus.

Dans un mode de réalisation, le pneumatique est destiné à un véhicule tourisme comprenant notamment les véhicules 4x4 et "SUV" (*Sport Utility Vehicles*).

Dans un autre mode de réalisation le pneumatique est destiné à un véhicule industriel comprenant les camionnettes, les véhicules lourds tels que "Poids lourd" - i.e., métro, bus, engins de transport routier (camions, tracteurs, remorques), véhicules hors-la-route -, les engins agricoles ou de génie civil, les aéronefs et autres véhicules de transport ou de manutention.

Selon l'invention, le pneumatique comprenant un sommet surmonté d'une bande de roulement, deux flancs, deux bourrelets, chaque flanc reliant chaque bourrelet au sommet, une armature de carcasse ancrée dans chacun des bourrelets et s'étendant dans les flancs et jusque dans le sommet, une armature de sommet radialement intercalée entre l'armature de carcasse et la bande de roulement, l'armature de sommet comprend le produit renforcé.

De préférence, l'armature de sommet comprend une armature de travail comprenant le produit renforcé et une armature de frettage radialement intercalée entre l'armature de travail et la bande de roulement.

L'armature de frettage a pour fonction première de contenir les nappes de travail qui sont, à haute vitesse, soumises à la force centrifuge.

Préférentiellement, l'armature de frettage comprend au moins un élément de renfort textile de frettage.

Par textile, on comprend que les premiers et deuxièmes éléments filaires sont réalisés dans un matériau choisi parmi un polyester, tel que le polyéthylène téréphtalate (PET), le polyéthylène naphthalate (PEN), le polybutylène téréphthalate (PBT), le polybutylène naphthalate (PBN), le polypropylène téréphthalate (PPT) ou le polypropylène naphthalate (PPN), un polyamide, par exemple un polyamide aliphatique comme le nylon ou un polyamide aromatique comme l'aramide, une polycétone, une cellulose comme la rayonne ou un mélange de ces matériaux.

Les éléments de renfort textiles de frettage sont de préférence disposés pratiquement parallèles les uns aux autres et s'étendent sensiblement circonférentiellement autour du pneumatique de manière à former un angle compris dans un domaine de -5° à 5° avec la direction circonférentielle du pneumatique.

De préférence, le ou les éléments de renfort textiles de frettage de l'armature de frettage sont réalisés dans un matériau thermorétractile.

Avantageusement, la contraction thermique CT de chaque élément de renfort textile de frettage de l'armature de frettage est strictement inférieure à 7,5% et plus préférentiellement à 3,5% après 2 min à 185°C.

La contraction thermique CT est mesurée, sauf précisions différentes, selon la norme ASTM D1204-08, par exemple sur un appareil du type « TESTRITE », sous une pré-tension dite standard de 0,5 cN/tex (donc ramenée au titre ou densité linéique de l'échantillon testé). La grandeur CT peut être indistinctement mesurée sur des éléments de renfort textiles de frettage initiaux encollés avant leur incorporation dans le produit renforcé puis le pneumatique, ou bien mesurée sur ces éléments de renfort une fois extraits du pneumatique et de préférence « dégommés » (c'est-à-dire débarrassés de la masse de caoutchouc qui les enrobe).

Dans un mode de réalisation, le pneumatique comprend au moins un sillon circonférentiel ménagé dans la bande de roulement. L'épaisseur moyenne C de masse de caoutchouc de la bande de roulement séparant un fond radialement interne du sillon circonférentiel du bord radialement externe de l'armature de sommet est préférentiellement inférieure ou égale à 1,5 mm et encore plus préférentiellement à 1 mm. Par épaisseur moyenne C, on entend l'épaisseur moyenne calculée sur 5 mesures réparties selon la direction axiale du sillon.

L'invention sera mieux comprise à la lecture de la description qui va suivre, donnée uniquement à titre d'exemple non limitatif et faite en se référant aux dessins dans lesquels:
- la figure 1 est une vue en coupe d'un pneumatique selon l'invention ;
- la figure 2 est une vue en coupe d'un produit renforcé selon un premier mode de réalisation de l'invention formant une nappe de travail du pneumatique de la figure 1;
- la figure 3 est une vue en coupe d'un élément de renfort du produit renforcé de la figure 2 ;
- la figure 4 est une vue analogue à celle de la figure 2 d'un produit renforcé selon un deuxième mode de réalisation de l'invention
- la figure 5 est une vue analogue à celle de la figure 2 d'un produit renforcé de l'état de la technique.

Dans la description suivante, dans l'emploi du terme « radial », il convient de distinguer plusieurs utilisations différentes du mot par la personne du métier. Premièrement, l'expression se réfère à un rayon du pneumatique. C'est dans ce sens qu'on dit d'un point P1 qu'il est « radialement intérieur » à un point P2 (ou « radialement à l'intérieur » du point P2) s'il est plus près de l'axe de rotation du pneumatique que le point P2. Inversement, un point P3 est dit « radialement extérieur à » un point P4 (ou « radialement à l'extérieur » du point P4) s'il est plus éloigné de l'axe de rotation du pneumatique que le point P4. On dira qu'on avance « radialement vers l'intérieur (ou l'extérieur) » lorsqu'on avance en direction des rayons plus petits (ou plus grands). Lorsqu'il est question de distances radiales, ce sens du terme s'applique également.

En revanche, un élément de renfort ou une armature est dit « radial » lorsque l'élément de renfort ou les éléments de renfort de l'armature font avec la direction circonférentielle un angle supérieur ou égal à 65° et inférieur ou égal à 90°.

Une direction « axiale » est une direction parallèle à l'axe de rotation du pneumatique. Un point P5 est dit « axialement intérieur » à un point P6 (ou «axialement à l'intérieur » du point P6) s'il est plus près du plan médian M du pneumatique que le point P6. Inversement, un point P7 est dit « axialement extérieur à » un point P8 (ou « axialement à l'extérieur » du point P8) s'il est plus éloigné du plan médian M du pneumatique que le point P8.

Le « plan médian » M du pneumatique est le plan qui est normal à l'axe de rotation du pneumatique et qui se situe à équidistance des structures annulaires de renfort de chaque bourrelet.

Une direction « circonférentielle » est une direction qui est perpendiculaire à la fois à un rayon du pneumatique et à la direction axiale.

D'autre part, tout intervalle de valeurs désigné par l'expression « de a à b » signifie le domaine de valeurs allant de la borne « a » jusqu'à la borne « b » c'est-à-dire incluant les bornes strictes « a » et « b ».

### EXEMPLE DE PNEUMATIQUE ET DE PRODUIT RENFORCE SELON L'INVENTION

Dans les figures, on a représenté un repère X, Y, Z correspondant aux directions habituelles respectivement axiale (X), radiale (Y) et circonférentielle (Z) d'un pneumatique.

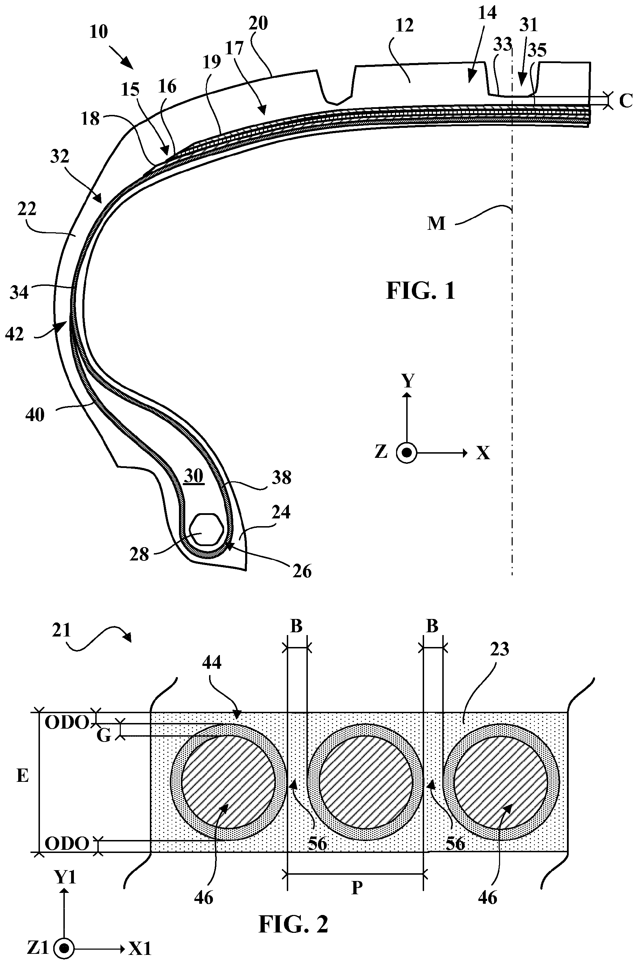

On a représenté sur la figure 1 un pneumatique conforme à un premier mode de réalisation de l'invention et désigné par la référence générale 10. Le pneumatique 10 est sensiblement de révolution autour d'un axe sensiblement parallèle à la direction axiale X. Le pneumatique 10 est ici destiné à un véhicule de tourisme.

Le pneumatique 10 comporte un sommet 12 comprenant une armature de sommet 14 comprenant une armature de travail 15 comprenant deux nappes de travail 16, 18 d'éléments de renfort et une armature 17 de frettage comprenant une nappe de frettage 19. L'armature de sommet 14 est surmontée d'une bande de roulement 20. Ici, l'armature de frettage 17, ici la nappe de frettage 19, est radialement intercalée entre l'armature de travail 15 et la bande de roulement 20.

Deux flancs 22 prolongent le sommet 12 radialement vers l'intérieur. Le pneumatique 10 comporte en outre deux bourrelets 24 radialement intérieurs aux flancs 22 et comportant chacun une structure annulaire de renfort 26, en l'occurrence une tringle 28, surmontée d'un masse de gomme 30 de bourrage, ainsi qu'une armature de carcasse radiale 32. L'armature de sommet 14 est radialement intercalée entre l'armature de carcasse 32 et la bande de roulement 20. Chaque flanc 22 relie chaque bourrelet 24 au sommet 14.

L'armature de carcasse 32 comporte de préférence une seule nappe de carcasse 34 d'éléments de renfort textiles radiaux. L'armature de carcasse 32 est ancrée à chacun des bourrelets 24 par un retournement autour de la tringle 28 de manière à former dans chaque bourrelet 24 un brin aller 38 s'étendant depuis les bourrelets 24 à travers les flancs 22 jusque dans le sommet 12, et un brin retour 40, l'extrémité radialement extérieure 42 du brin retour 40 étant radialement à l'extérieur de la structure annulaire de renfort 26. L'armature de carcasse 32 s'étend ainsi depuis les bourrelets 24 à travers les flancs 22 jusque dans le sommet 12. Dans ce mode de réalisation, l'armature de carcasse 32 s'étend également axialement au travers du sommet 12.

Le pneumatique 10 comprend au moins un sillon circonférentiel 31 ménagé dans la bande de roulement 20. L'épaisseur moyenne C de masse de caoutchouc de la bande de roulement 20 séparant un fond radialement interne 33 du sillon 31 circonférentiel du bord radialement externe 35 de l'armature de sommet 14, ici la surface radialement externe de la nappe de frettage 19, est préférentiellement inférieure ou égale à 1,5 mm et encore plus préférentiellement à 1 mm.

Chaque nappe de travail 16, 18 forme un produit renforcé 21 selon l'invention comprenant des éléments de renfort 44 formant un angle allant de 15° à 40°, de préférence allant de 20° à 30° et ici égal à 26° avec la direction circonférentielle Z du pneumatique 10. Les éléments de renfort 44 sont croisés d'une nappe de travail par rapport à l'autre.

La nappe de frettage 19 comprend des éléments de renfort textiles de frettage formant un angle au plus égal à 10°, de préférence allant de 5° à 10° avec la direction circonférentielle Z du pneumatique 10. En l'espèce, les éléments de renfort textiles de frettage sont des retors réalisés dans un matériau thermorétractile, ici en polyamide 66, chaque retors consistant en deux filés de 140 tex qui ont été retordus ensemble (sur câbleuse directe) à 250 tours/mètre, dont le diamètre est égal à environ 0,66 mm. La contraction thermique CT de chaque élément de renfort textile de frettage est égale à environ 7%.

Chaque nappe de travail 16, 18, de frettage 19 et de carcasse 34 comprend une matrice d'élastomère 23 dans laquelle sont noyés les éléments de renfort de la nappe correspondante. Les compositions de caoutchouc des matrices d'élastomère 23 des nappes de travail 16, 18, de frettage 19 et de carcasse 34 sont des compositions conventionnelles pour calandrage d'éléments de renfort comprenant de façon classique un élastomère diénique, par exemple du caoutchouc naturel, une charge renforçante, par exemple du noir de carbone et/ou de la silice, un système de réticulation, par exemple un système de vulcanisation, de préférence comprenant du soufre, de l'acide stéarique et de l'oxyde de zinc, et éventuellement un accélérateur et/ou un retardateur de vulcanisation et/ou divers additifs.

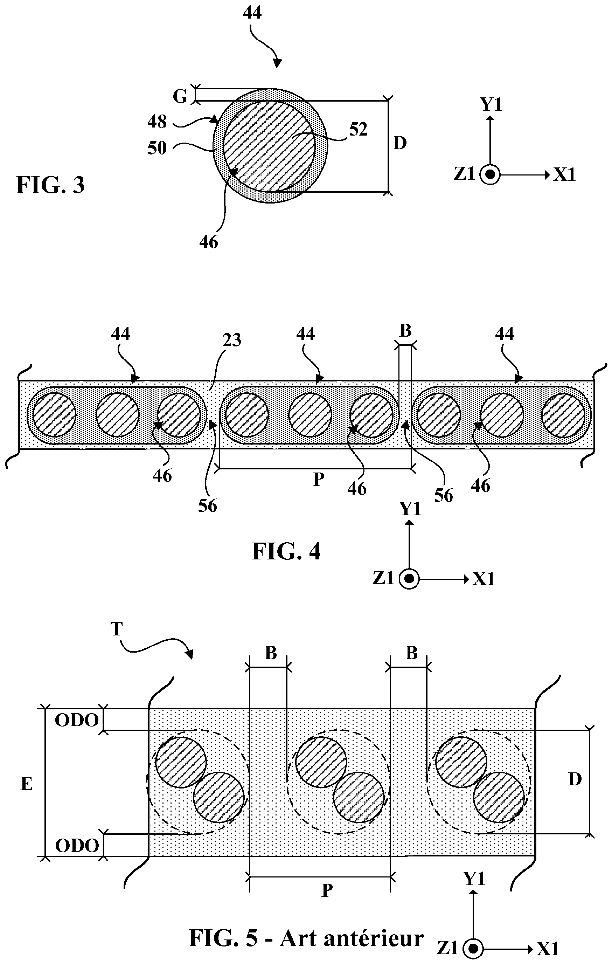

Sur les figures 2 et 3, on a représenté le produit renforcé 21 et les éléments de renfort 44 dans un repère X1, Y1, Z1 dans lequel la direction Y1 est sensiblement parallèle à la direction radiale Y et les directions X1 et Z1 font un angle allant de 15° à 40°, de préférence allant de 20° à 30° et ici égal à 26°, respectivement avec les directions axiale X et circonférentielle Z. Sur ces figures 2 et 3, les éléments de renfort 44 du produit renforcé 21 sont agencés côte à côte selon la direction principale X1. Les éléments de renfort 44 s'étendent parallèlement les uns aux autres. Chaque élément de renfort 44 comprend au moins un élément filaire 46 s'étendant selon la direction Z1 faisant, lorsqu'il est dans le pneumatique 10, un angle égal à 26° avec la direction circonférentielle Z du pneumatique 10. Chaque élément de renfort 44 comprend également au moins une gaine 48 revêtant collectivement les éléments filaires 46 et comprenant au moins une couche 50 d'une composition polymérique thermoplastique. Dans ce premier mode de réalisation, Chaque élément de renfort 44 comprend un unique élément filaire 46.

Chaque élément filaire 46 comprend un unique monofilament 52. Chaque monofilament 52 est métallique, ici en acier revêtu d'un revêtement de protection comprenant par exemple du laiton ou du zinc. Chaque monofilament 52 présente un diamètre allant de 0,10 mm à 0,35 mm et ici égal à 0,30 mm.

Chaque élément filaire 46 présente un encombrement D moyen selon la direction Y1 sensiblement perpendiculaire à la direction principale X1, ici selon l'épaisseur du produit renforcé 21. L'encombrement D est ici égal au diamètre du cercle circonscrit à l'élément filaire 46. Ici, D=0,30 mm.

La gaine 48 présente une épaisseur G moyenne au dos de chaque élément filaire 46 selon la direction Y1 perpendiculaire à la direction principale X1 allant de 1 µm à 2 mm, de préférence de 10 µm à 1 mm et plus préférentiellement de 35 µm à 200 µm. Ici, G=75 µm.

La gaine 48 comprend une unique couche 50 de la composition polymérique thermoplastique comprenant un polymère thermoplastique, un élastomère diénique fonctionnalisé, un poly (p-phénylène éther) ou un mélange de ces matériaux. Ici la composition polymérique thermoplastique comprend un polymère thermoplastique, par exemple du polyamide 66. Optionnellement, la composition polymérique thermoplastique pourra comprendre un élastomère diénique fonctionnalisé, par exemple un thermoplastique styrénique comprenant une fonction époxide, carbonyl, anhydride ou ester et/ou un poly-p-phénylène ether.

La gaine 48 est revêtue d'une couche d'une colle d'adhésion (non représentée) entre la gaine 48 et la matrice d'élastomère 23.

L'épaisseur E moyenne du produit renforcé, ici de chaque nappe de travail 16, 18, est inférieure ou égale à 0,95 mm, de préférence à 0,85 mm et plus préférentiellement à 0,75 mm et ici E=0,64 mm.

L'épaisseur minimale ODO moyenne d'élastomère présente au dos de la gaine est inférieure ou égale à 0,17 mm, de préférence à 0,14 mm, plus préférentiellement à 0,11 mm et ici ODO=0,09 mm.

Les épaisseurs minimale moyenne d'élastomère ODO et moyenne E du produit renforcé sont mesurées selon une direction sensiblement perpendiculaire à la direction principale X1, ici selon la direction Y1 parallèle à l'épaisseur du produit renforcé 21 qui, une fois dans le pneumatique est la direction radiale Y du pneumatique 10.

Le rapport R1=ODO/E de l'épaisseur minimale ODO moyenne d'élastomère présente au dos de la gaine 48 sur l'épaisseur E moyenne du produit renforcé 21 est inférieur ou égal à 0,17. En l'espèce, R1 est inférieur ou égal à 0,15 et de préférence à 0,14. Ici R1=0,14.

Le pas de pose P des éléments de renfort 44 selon la direction principale X1 est inférieur ou égal à 1,1 mm, de préférence à 1 mm et plus préférentiellement à 0,8 mm. Ici, P=0,62 mm.

Le produit renforcé 21 comprend des ponts 56 d'élastomère séparant deux éléments de renfort 44 successifs. L'épaisseur minimale B moyenne de chaque pont d'élastomère 56 selon la direction principale X1 est inférieure ou égale à 0,5 mm, de préférence à 0,35 mm, plus préférentiellement à 0,20 mm et ici B=0,17 mm.

Le rapport R2=B/E de l'épaisseur minimale B moyenne d'élastomère séparant deux éléments de renfort successifs sur l'épaisseur E moyenne du produit renforcé 21 est inférieur ou égal à 1, de préférence à 0,6, plus préférentiellement à 0,5, encore plus préférentiellement à 0,3 et ici R2=0,27.

Le rapport R3=D/E de l'encombrement D moyen sur l'épaisseur E moyenne du produit renforcé 21 est inférieur ou égal à 0,6, de préférence à 0,55 et plus préférentiellement à 0,50. Ici R3=0,47.

On a représenté sur la figure 4 un produit renforcé selon une deuxième mode de réalisation. Les éléments analogues à ceux du premier mode de réalisation sont désignés par des références identiques.

A la différence du produit renforcé selon le premier mode de réalisation, chaque élément de renfort 44 du produit renforcé selon le deuxième mode de réalisation comprend plusieurs éléments filaires 46 comprenant chacun un unique monofilament 52 et une gaine commune 48 revêtant collectivement les éléments filaires 46.

### TESTS COMPARATIFS

On a comparé le produit renforcé 21 et le pneumatique 10 selon l'invention décrits ci-dessus et un produit renforcé T et un pneumatique PT de l'état de la technique. Le produit renforcé T est représenté sur la figure 5. Chaque élément filaire du produit renforcé T comprend un brin multifilamentaire de deux monofilaments élémentaires de 0,30 mm retordus ensemble. Les caractéristiques des produits renforcés et les pneumatiques sont rassemblées dans le tableau 1 ci-dessous.

Toutes les données indiquées ci-dessus (E, ODO, B, G, D et P) sont des valeurs moyennes mesurées expérimentalement par un opérateur sur des photographies de coupes radiales de produits renforcés ou des pneumatiques opérées comme indiqué précédemment sur 5 cm de part et d'autre du plan médian du produit renforcé ou du pneumatique.

**Tableau 1**

| | **E (mm)** | **ODO (mm)** | **B (mm)** | **G (µm)** | **D (mm)** | **P (mm)** | **R1** | **R2** | **R3** |
|---|---|---|---|---|---|---|---|---|---|
| **T** | 0,94 | 0,17 | 0,60 | 0 | 0,60 | 1,2 | 0,18 | 0,64 | 0,64 |
| **21** | 0,64 | 0,09 | 0,17 | 75 | 0,3 | 0,62 | 0,14 | 0,27 | 0,47 |

On a soumis les produits renforcés T et 21 et les pneumatiques PT et 10 à différents tests décrits ci-dessous et dont les résultats sont rassemblés dans le tableau 2. Les résultats sont donnés en base 100 par rapport aux produit T et pneumatique PT témoins. Ainsi, plus la valeur est supérieure à 100, meilleure est la performance du produit renforcé ou du pneumatique selon l'invention par rapport au produit renforcé ou au pneumatique de l'état de la technique.

La force à rupture du produit renforcé est mesurée en déterminant la force à rupture en traction de chaque élément filaire selon la norme ISO 6892 de 1984 puis en la multipliant par la densité linéique d'éléments filaires selon la direction principale du produit renforcé.

La résistance au roulement a été mesurée sur un volant, selon la méthode ISO 87-67 (1992).

On mesure l'énergie de rupture (« Breaking Energy ») conformément à la norme ASTM WK20631.

**Tableau 2**

| **Performances du produit renforcé** | **T** | **21** |
|---|---|---|
| Poids d'élastomère du produit renforcé | 100 | 130 |
| Poids total du produit renforcé | 100 | 120 |
| Force à rupture du produit renforcé | 100 | 100 |

| **Performances du pneumatique** | **PT** | **10** |
|---|---|---|
| Résistance au roulement | 100 | 100 |
| Energie de rupture | 100 | 144 |

Ainsi, on note que, toutes choses étant égales par ailleurs, en plus de présenter une masse réduite, le produit renforcé et le pneumatique selon l'invention présentent des performances équivalentes, voire supérieures à celles du produit renforcé et du pneumatique de l'état de la technique. En particulier, on note que le pneumatique selon l'invention présente une énergie de rupture bien supérieure à celle du pneumatique témoin PT.

L'invention ne se limite pas aux modes de réalisation décrits ci-dessus.

En effet, on pourra également envisager un pneumatique selon l'invention dans lequel l'armature de sommet comprend également une armature de protection radialement intercalée entre l'armature de frettage et l'armature de travail.

On pourra aussi envisager un pneumatique selon l'invention dans lequel l'armature de sommet ne comprend pas d'armature de frettage mais une armature de protection et une armature de travail, l'armature de protection étant radialement intercalée entre la bande de roulement et l'armature de travail.

On pourra également combiner les caractéristiques des différents modes de réalisation décrits ou envisagés ci-dessus sous réserve que celles-ci soient compatibles entre elles.

## Revendications

1. Pneumatique (10) comprenant un sommet (12) surmonté d'une bande de roulement (20), deux flancs (22), deux bourrelets (24), chaque flanc (22) reliant chaque bourrelet (24) au sommet (12), une armature de carcasse (32) ancrée dans chacun des bourrelets (24) et s'étendant dans les flancs (22) jusque dans le sommet (12), une armature de sommet (14) radialement intercalée entre l'armature de carcasse (32) et la bande de roulement (20), l'armature de sommet (14) comprenant un produit renforcé (21) comprenant :
- une matrice d'élastomère (23),
- plusieurs éléments (44) de renfort noyés dans la matrice d'élastomère (23), les éléments de renfort (44) étant agencés côte à côte selon une direction principale (X1), **caractérisé en ce que** chaque élément de renfort (44) comprend :
- au moins un élément filaire (46) comprenant un unique monofilament (52),
- au moins une gaine (48) revêtant l'élément filaire (46) et comprenant au moins une couche (50) d'une composition polymérique thermoplastique,
le rapport R1=ODO/E de l'épaisseur minimale ODO moyenne d'élastomère présente au dos de la gaine sur l'épaisseur E moyenne du produit renforcé (21) est inférieur ou égal à 0,17, les épaisseurs minimale moyenne d'élastomère ODO et moyenne E du produit renforcé (21) étant mesurées selon une direction (Y1) sensiblement perpendiculaire à la direction principale (X1).

2. Pneumatique (10) selon la revendication précédente, dans lequel le rapport R1 est inférieur ou égal à 0,15, de préférence à 0,14.

3. Pneumatique (10) selon l'une quelconque des revendications précédentes, dans lequel l'épaisseur minimale ODO moyenne est inférieure ou égale à 0,17 mm, de préférence à 0,14 mm, plus préférentiellement à 0,11 mm.

4. Pneumatique (10) selon l'une quelconque des revendications précédentes, dans lequel l'épaisseur E moyenne est inférieure ou égale à 0,95 mm, de préférence à 0,85 mm et plus préférentiellement à 0,75 mm.

5. Pneumatique (10) selon l'une quelconque des revendications précédentes, dans lequel le rapport R2=B/E de l'épaisseur minimale B moyenne d'élastomère séparant deux éléments de renfort (44) successifs selon la direction principale (X1) sur l'épaisseur E moyenne du produit renforcé (21) est inférieur ou égal à 1, de préférence à 0,6, plus préférentiellement à 0,5 et encore plus préférentiellement à 0,3.

6. Pneumatique (10) selon l'une quelconque des revendications précédentes, dans lequel l'épaisseur minimale B moyenne d'élastomère séparant deux éléments de renfort (44) successifs selon la direction principale (X1) est inférieure ou égale à 0,5 mm, de préférence à 0,35 mm, plus préférentiellement à 0,20 mm.

7. Pneumatique (10) selon l'une quelconque des revendications précédentes, dans lequel le pas de pose P des éléments de renfort (44) selon la direction principale (X1) est inférieur ou égal à 1,1 mm, de préférence à 1 mm et plus préférentiellement à 0,8 mm.

8. Pneumatique (10) selon l'une quelconque des revendications précédentes, dans lequel l'épaisseur G moyenne de la gaine au dos de chaque élément filaire (46) selon la direction perpendiculaire (Y1) à la direction principale (X1) va de 1 µm à 2 mm, de préférence de 10 µm à 1 mm et plus préférentiellement de 35 µm à 200 µm.

9. Pneumatique (10) selon l'une quelconque des revendications 1 à 8, dans lequel chaque élément de renfort (44) comprend un unique élément filaire (46).

10. Pneumatique (10) selon l'une quelconque des revendications 1 à 8, dans lequel chaque élément de renfort (44) comprend plusieurs éléments filaires (46) comprenant chacun un unique monofilament (52) et une gaine commune (48) revêtant collectivement les éléments filaires (46).

11. Pneumatique (10) selon l'une quelconque des revendications précédentes, dans lequel le ou chaque monofilament (52) est métallique.

12. Pneumatique (10) selon l'une quelconque des revendications précédentes, dans lequel le ou chaque monofilament (52) présente un diamètre allant de 0,10 mm à 0,35 mm, de préférence de 0,12 mm à 0,26 mm et plus préférentiellement de 0,14 mm à 0,20 mm.

13. Pneumatique (10) selon l'une quelconque des revendications précédentes, dans lequel chaque élément filaire (46) présentant un encombrement D moyen selon la direction (Y1) sensiblement perpendiculaire à la direction principale (X1), le rapport R3=D/E de l'encombrement D moyen sur l'épaisseur E moyenne du produit renforcé (21) est inférieur ou égal à 0,6, de préférence à 0,55 et plus préférentiellement à 0,50.

14. Pneumatique (10) selon l'une quelconque des revendications précédentes, dans lequel la gaine (48) est revêtue d'une couche d'une colle d'adhésion entre la gaine et la matrice d'élastomère.

15. Pneumatique (10) selon l'une quelconque des revendications précédentes, dans lequel l'armature de sommet (14) comprend une armature de travail (15) comprenant le produit renforcé (21) et une armature de frettage (17) radialement intercalée entre l'armature de travail (15) et la bande de roulement (20).

## Patentansprüche

1. Reifen (10), welcher einen Scheitel (12), der von einem Laufstreifen (20) überlagert wird, zwei Seitenwände (22), zwei Wülste (24), wobei jede Seitenwand (22) einen jeweiligen Wulst (24) mit dem Scheitel (12) verbindet, eine Karkassenbewehrung (32), die in jedem der Wülste(24) verankert ist und sich in den Seitenwänden (22) bis in den Scheitel (12) erstreckt, und eine Scheitelbewehrung (14), die radial zwischen der Karkassenbewehrung (32) und dem Laufstreifen (20) angeordnet ist, umfasst, wobei die Scheitelbewehrung (14) ein verstärktes Produkt (21) umfasst, welches umfasst:
- eine Elastomermatrix (23),
- mehrere Verstärkungselemente (44), die in die Elastomermatrix (23) eingebettet sind, wobei die Verstärkungselemente (44) entlang einer Hauptrichtung (X1) nebeneinander angeordnet sind, **dadurch gekennzeichnet, dass** jedes Verstärkungselement (44) umfasst:
- wenigstens ein fadenförmiges Element (46), das ein einziges Monofilament (52) umfasst,
- wenigstens eine Hülle (48), die das fadenförmige Element (46) bedeckt und wenigstens eine Schicht (50) aus einer thermoplastischen Polymerzusammensetzung umfasst,
wobei das Verhältnis R1 = ODO/E der mittleren Mindestdicke ODO des Elastomers, die außen auf der Hülle vorhanden ist, zur mittleren Dicke E des verstärkten Produkts (21) kleiner oder gleich 0,17 ist, wobei die mittlere Mindestdicke des Elastomers ODO und die mittlere Dicke E des verstärkten Produkts (21) in einer Richtung (Y1) gemessen werden, die im Wesentlichen senkrecht zur Hauptrichtung (X1) ist.

2. Reifen (10) nach dem vorhergehenden Anspruch, wobei das Verhältnis R1 kleiner oder gleich 0,15, vorzugsweise kleiner oder gleich 0,14 ist.

3. Reifen (10) nach einem der vorhergehenden Ansprüche, wobei die mittlere Mindestdicke ODO kleiner oder gleich 0,17 mm, vorzugsweise kleiner oder gleich 0,14 mm, stärker bevorzugt kleiner oder gleich 0,11 mm ist.

4. Reifen (10) nach einem der vorhergehenden Ansprüche, wobei die mittlere Dicke E kleiner oder gleich 0,95 mm, vorzugsweise kleiner oder gleich 0,85 mm und stärker bevorzugt kleiner oder gleich 0,75 mm ist.

5. Reifen (10) nach einem der vorhergehenden Ansprüche, wobei das Verhältnis R2 = B/E der mittleren Mindestdicke B des Elastomers, die zwei in der Hauptrichtung (X1) aufeinander folgende Verstärkungselemente (44) trennt, zur mittleren Dicke E des verstärkten Produkts (21) kleiner oder gleich 1, vorzugsweise kleiner oder gleich 0,6, stärker bevorzugt kleiner oder gleich 0,5 und noch stärker bevorzugt kleiner oder gleich 0,3 ist.

6. Reifen (10) nach einem der vorhergehenden Ansprüche, wobei die mittlere Mindestdicke B des Elastomers, die zwei in der Hauptrichtung (X1) aufeinander folgende Verstärkungselemente (44) trennt, kleiner oder gleich 0,5 mm, vorzugsweise kleiner oder gleich 0,35 mm, stärker bevorzugt kleiner oder gleich 0,20 mm ist.

7. Reifen (10) nach einem der vorhergehenden Ansprüche, wobei der Abstand P der Einlage der Verstärkungselemente (44) in der Hauptrichtung (X1) kleiner oder gleich 1,1 mm, vorzugsweise kleiner oder gleich 1 mm und stärker bevorzugt kleiner oder gleich 0,8 mm ist.

8. Reifen (10) nach einem der vorhergehenden Ansprüche, wobei die mittlere Dicke G der Hülle um jedes fadenförmige Element (46) in der zur Hauptrichtung (X1) senkrechten Richtung (Y1) zwischen 1 µm und 2 mm, vorzugsweise zwischen 10 µm und 1 mm und stärker bevorzugt zwischen 35 µm und 200 µm liegt.

9. Reifen (10) nach einem der Ansprüche 1 bis 8, wobei jedes Verstärkungselement (44) ein einziges fadenförmiges Element (46) umfasst.

10. Reifen (10) nach einem der Ansprüche 1 bis 8, wobei jedes Verstärkungselement (44) mehrere fadenförmige Elemente (46), die jeweils ein einziges Monofilament (52) umfassen, und eine gemeinsame Hülle (48), welche die fadenförmigen Elemente (46) zusammen bedeckt, umfasst.

11. Reifen (10) nach einem der vorhergehenden Ansprüche, wobei das oder jedes Monofilament (52) metallisch ist.

12. Reifen (10) nach einem der vorhergehenden Ansprüche, wobei das oder jedes Monofilament (52) einen Durchmesser von 0,10 mm bis 0,35 mm, vorzugsweise von 0,12 mm bis 0,26 mm und stärker bevorzugt von 0,14 mm bis 0,20 mm aufweist.

13. Reifen (10) nach einem der vorhergehenden Ansprüche, wobei, wenn jedes fadenförmige Element (46) eine mittlere Größe D in der Richtung (Y1), die zur Hauptrichtung (X1) im Wesentlichen senkrecht ist, aufweist, das Verhältnis R3 = D/E der mittleren Größe D zur mittleren Dicke E des verstärkten Produkts (21) kleiner oder gleich 0,6, vorzugsweise kleiner oder gleich 0,55 und stärker bevorzugt kleiner oder gleich 0,50 ist.

14. Reifen (10) nach einem der vorhergehenden Ansprüche, wobei die Hülle (48) mit einer Schicht eines Haftklebers zwischen der Hülle und der Elastomermatrix bedeckt ist.

15. Reifen (10) nach einem der vorhergehenden Ansprüche, wobei die Scheitelbewehrung (14) eine Arbeitsbewehrung (15), die das verstärkte Produkt (21) umfasst, und eine Umhüllungsbewehrung (17), die radial zwischen der Arbeitsbewehrung (15) und dem Laufstreifen (20) angeordnet ist, umfasst.

## Claims

1. Tyre (10) according to the preceding claim, comprising a crown (12) surmounted by a tread (20), two sidewalls (22), two beads (24), each sidewall (22) connecting each bead (24) to the crown (12), a carcass reinforcement (32) anchored in each of the beads (24) and extending through the sidewalls (22) as far as the crown (12), a crown reinforcement (14) interposed radially between the carcass reinforcement (32) and the tread (20), the crown reinforcement (14) comprising a reinforced product (21) comprising:
- an elastomer matrix (23),
- several reinforcing elements (44) embedded in the elastomer matrix (23), the reinforcing elements (44) being arranged side by side in a main direction (X1), **characterized in that** each reinforcing element (44) comprises:
- at least one filamentary element (46) comprising a single monofilament (52),
- at least one sheath (48) coating the filamentary element (46) and comprising at least one layer (50) of a thermoplastic polymer composition,
the ratio R1=ODO/E of the mean minimum thickness ODO of elastomer present on the back of the sheath to the mean thickness E of the reinforced product (21) is less than or equal to 0.17, the mean minimum thickness of elastomer ODO and mean thickness E of the reinforced product (21) being measured in a direction (Y1) substantially perpendicular to the main direction (X1).

2. Tyre (10) according to the preceding claim, in which the ratio R1 is less than or equal to 0,15, preferably less than or equal to 0,14.

3. Tyre (10) according to either one of the preceding claims, in which the mean minimum thickness ODO is less than or equal to 0,17 mm, preferably less than or equal to 0,14 mm, more preferably less than or equal to 0,11 mm.

4. Tyre (10) according to any one of the preceding claims, in which the mean thickness E is less than or equal to 0,95 mm, preferably less than or equal to 0,85 mm and more preferably less than or equal to 0,75 mm.

5. Tyre (10) according to any one of the preceding claims, in which the ratio R2=B/E of the mean minimum thickness B of elastomer separating two successive reinforcing elements (44) in the main direction (X1) to the mean thickness E of the reinforced product (21) is less than or equal to 1, preferably less than or equal to 0,6, more preferably less than or equal to 0,5 and more preferably still less than or equal to 0,3.

6. Tyre (10) according to any one of the preceding claims, in which the mean minimum thickness B of elastomer separating two successive reinforcing elements (44) in the main direction (X1) is less than or equal to 0,5 mm, preferably less than or equal to 0,35 mm, and more preferably less than or equal to 0,20 mm.

7. Tyre (10) according to any one of the preceding claims, in which the pitch P at which the reinforcing elements (44) are laid in the main direction (X1) is less than or equal to 1,1 mm, preferably less than or equal to 1 mm and more preferably less than or equal to 0,8 mm.

8. Tyre (10) according to any one of the preceding claims, in which the mean thickness G of the sheath on the back of each filamentary element (46) in the direction (Y1) perpendicular to the main direction (X1) ranges from 1 µm to 2 mm, preferably from 10 µm and 1 mm, and more preferably from 35 µm to 200 µm.

9. Tyre (10) according to any one of Claims 1 to 8, in which each reinforcing element (44) comprises a single filamentary element (46).

10. Tyre (10) according to any one of Claims 1 to 8, in which each reinforcing element (44) comprises several filamentary elements (46), each comprising a single monofilament (52) and a communal sheath (48) collectively coating the filamentary elements (46).

11. Tyre (10) according to any one of the preceding claims, in which the or each monofilament (52) is metallic.

12. Tyre (10) according to any one of the preceding claims, in which the or each elementary monofilament (52) has a diameter ranging from 0,10 mm to 0,35 mm, preferably from 0,12 mm to 0,26 mm, and more preferably from 0,14 mm to 0,20 mm.

13. Tyre (10) according to any one of the preceding claims, in which each filamentary element (46) has a mean bulk D in the direction (Y1) substantially perpendicular to the main direction (X1), the ratio R3=D/E of the mean bulk D to the mean thickness E of the reinforced product (21) is less than or equal to 0,6, preferably less than or equal to 0,55, and more preferably less than or equal to 0,50.

14. Tyre (10) according to any one of the preceding claims, in which the sheath (48) is coated with a layer of an adhesive providing adhesion between the sheath and the elastomer matrix.

15. Tyre (10) according to any one of the preceding claims, in which the crown reinforcement (14) comprises a working reinforcement (15) comprising the reinforced product (21) and a hoop reinforcement (17) which is interposed radially between the working reinforcement (15) and the tread (20).
